# EUROPEAN PATENT APPLICATION

(11) **EP 3 671 487 A2**
(43) Date of publication of application: **24.06.2020**
(21) Application number: 19213465.8
(22) Date of filing: 04.12.2019
(51) Int. Cl.: G06F 16/738, G06F 16/78

(54) **GENERATION OF A VIDEO FILE**

(30) Priority: 21.12.2018 US 201816231005
(71) Applicant: AdLaunch International Inc., 00100 Helsinki (FI)
(72) Inventor: HYPÉN, Joel, 00100 Helsinki (FI); NYLUND, Marko, 00100 Helsinki (FI); GRANBOHM, Joakim, 02200 Espoo (FI)
(74) Representative: Boco IP Oy Ab

(57) **Abstract**

According to an aspect, there is provided a system for generating a video file. The system includes at least one processing unit and at least one memory. The at least one memory stores program instructions that, when executed by the at least one processing unit, cause the system to obtain dynamic data for generation of a video file; compare the dynamic data to timestamped tags associated with at least one source video file, a timestamped tag identifying a feature associated with a source video file in a temporal section of the source video file; based on the comparison, select a first set of temporal sections from the at least one source video file having features identified by the timestamped tags; and use the first set of temporal sections in generating a first video file.

## Description

### TECHNICAL FIELD

The present disclosure relates to the field of data processing in general, and to a solution for generating a video file.

### BACKGROUND

There exists a vast amount of video generation software that allow generation of a video file. This software may be locally executable by a user computer. Alternatively, the software may be a network-based solution accessible, for example, via the Internet with a web browser. A video generation software may comprise a video library including video clips from which a user may select desired video clips and generate a combined video file of a desired length.

The existing video editing software and video creation service alternatives have certain limits and drawbacks. The existing solutions comprise manual video editing software where a user has to manually perform complicated search and editing steps. For example, it may be difficult and time consuming for the user to find desired video clips from the video library and then to generate the combined video file based on the video clips. Further, it may be that the user wishes to use only a part or parts of a video clip. In other to do this, the user may have to first review the complete clip to be able to select a desired section of the video clip.

There is a need for a solution that would ease the generation of a video file.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object of the present disclosure to provide a technical solution for enabling generating a video easily and efficiently.

The object above is achieved by the features of the independent claims in the appended claims. Further embodiments and examples are apparent from the dependent claims, the detailed description and the accompanying drawings.

According to a first aspect, there is provided a system for generating a video file. The system comprises at least one processing unit and at least one memory connected to the at least one processing unit. The at least one memory stores program instructions that, when executed by the at least one processing unit, cause the system to: obtain dynamic data for generation of a video file; compare the dynamic data to timestamped tags associated with at least one source video file, a timestamped tag identifying a feature associated with a source video file in a temporal section of the source video file; based on the comparison, select a first set of temporal sections from the at least one source video file comprising features identified by the timestamped tags; and use the first set of temporal sections in generating a first video file. This enables a solution with which it is possible to generate a video file easily and automatically based on various dynamic data associated with the user.

In an implementation form of the first aspect, the at least one memory stores program instructions that, when executed by the at least one processing unit, cause the system to, based on the comparison, select a second set of temporal sections from the at least one source video file comprising features identified by the timestamped tags, the first set of temporal sections differing from the second set of temporal sections, and use the second set of temporal sections in generating a second video file. This enables a solution where a user may be simultaneously provided with multiple video file versions to allow the user to choose a desired video file.

In a further implementation form of the first aspect, the dynamic data comprises at least one of the following: a keyword input from a user; a length input of the video file from the user; a style input of content in the video file from the user; a mood input of content in the video file from the user; an example video file from the user; user account information; an example image from the user; data from at least one user configured dynamic data application programming interface (API); user website information; and social media account information. As the dynamic data may originate from various sources, this enables a versatile solution to generate the video file.

In a further implementation form of the first aspect, the at least one memory stores program instructions that, when executed by the at least one processing unit, cause the system to analyze the example video file from the user to determine at least one desired feature; and compare the at least one desired feature to the timestamped tags associated with at least one source video file. This enables a solution in which the user may provide a reference file that can be then used to generate the video file.

In a further implementation form of the first aspect, the at least one memory stores program instructions that, when executed by the at least one processing unit, cause the system to receive a selection of a sub-section of the generated video file, and generate at least one additional video file based on the selected sub-section. This enables a solution in which the user may be allowed to regenerate the video file based on a selection of a desired sub-section of the originally generated video file.

In a further implementation form of the first aspect, the at least one memory stores program instructions that, when executed by the at least one processing unit, cause the system to compare the dynamic data to timestamped tags associated with at least one source video file and to tags associated with at least one image file; based on the comparison, select the first set of temporal sections from the at least one source video file comprising features identified by the timestamped tags and at least one image file; and use the first set of temporal sections and the at least one image file in generating the first video file. This enables a solution in which, in addition to video content, still image data content may be compiled to the generated video file.

In a further implementation form of the first aspect, the at least one memory stores program instructions that, when executed by the at least one processing unit, cause the system to match video edit points of the video file with music beat of an audio file. This enables a solution in which music beat can be utilized to, for example, to time video edit points to match the music beat.

According to a second aspect, there is provided a method for generating a video file. The method comprises obtaining dynamic data for generation of a video file; comparing the dynamic data to timestamped tags associated with at least one source video file, a timestamped tag identifying a feature associated with a source video file in a temporal section of the source video file; based on the comparison, selecting a first set of temporal sections from the at least one source video file comprising features identified by the timestamped tags; and using the first set of temporal sections in generating a first video file.

In an implementation form of the second aspect, the method further comprises, based on the comparison, selecting a second set of temporal sections from the at least one source video file comprising features identified by the timestamped tags, the first set of temporal sections differing from the second set of temporal sections; and using the second set of temporal sections in generating a second video file.

In a further implementation form of the second aspect, the dynamic data comprises at least one of the following: a keyword input from a user; a length input of the video file from the user; a style input of content in the video file from the user; a mood input of content in the video file from the user; an example video file from the user; user account information; an example image from the user; data from at least one user configured dynamic data application programming interface (API); user website information; and social media account information.

In a further implementation form of the second aspect, the method further comprises analyzing the example video file from the user to determine at least one desired feature; and comparing the at least one desired feature to the timestamped tags associated with at least one source video file.

In a further implementation form of the second aspect, the method further comprises receiving a selection of a sub-section of the generated video file, and generating at least one additional video file based on the selected sub-section.

In a further implementation form of the second aspect, the method further comprises matching video edit points of the video file with music beat of an audio file.

In a further implementation form of the second aspect, the method further comprises comparing the dynamic data to timestamped tags associated with at least one source video file and to tags associated with at least one image file; based on the comparison, selecting the first set of temporal sections from the at least one source video file comprising features identified by the timestamped tags and at least one image file; and using the first set of temporal sections and the at least one image file in generating the first video file.

According to a third aspect, there is provided a computer program comprises program code which, when executed by at least one processor, performs the method of the second aspect.

According to a fourth aspect, there is provided a computer-readable medium comprising a computer program comprising program code which, when executed by at least one processor, performs the method of the second aspect.

### BRIEF DESCRIPTION OF THE DRAWINGS

The essence of the present invention is explained below with reference to the accompanying drawings in which:
FIG. 1 illustrates a flow chart of a method for generating a video file according to an embodiment.
FIG. 2 illustrates a block diagram illustrating operation of a video generator engine according to an embodiment.
FIG. 3 illustrates an example view presented for a user according to an embodiment.
FIG. 4 illustrates a system diagram depicting an exemplary system according to an embodiment.

### DETAILED DESCRIPTION

In the following description, references are made to the accompanying drawings, which form part of the present disclosure, and in which are shown, by way of illustration, specific aspects, embodiments and examples in which the present disclosure may be placed. It is understood that other aspects may be utilized and structural or logical changes may be made without departing from the scope of the present disclosure. The following detailed description, therefore, is not to be taken in a limiting sense, as the scope of the present disclosure is defined by the appended claims. Further, the present disclosure can be embodied in many other forms and should not be construed as limited to any certain structure or function disclosed in the following description.

According to the detailed description, it will be apparent to ones skilled in the art that the scope of the present disclosure covers any embodiment of the present invention, which is disclosed herein, irrespective of whether this embodiment is implemented independently or in concert with any other embodiment of the present disclosure. For example, the apparatus and method disclosed herein can be implemented in practice by using any numbers of the embodiments provided herein. Furthermore, it should be understood that any embodiment of the present disclosure can be implemented using one or more of the elements presented in the appended claims.

Examples and embodiments discussed below provide a user-friendly and easy way to automatically generate a video file or video files based on various dynamic data associated with a user. The dynamic data may comprise, for example, user input keywords and a desired length for the video file. The solution compares the dynamic data with timestamped tags associated with at least one source video file, wherein a timestamped tag identifying a feature associated with a source video file in a temporal section of the source video file. Based on the comparison, specific sections from the at least one source video file can be selected to generate a video file.

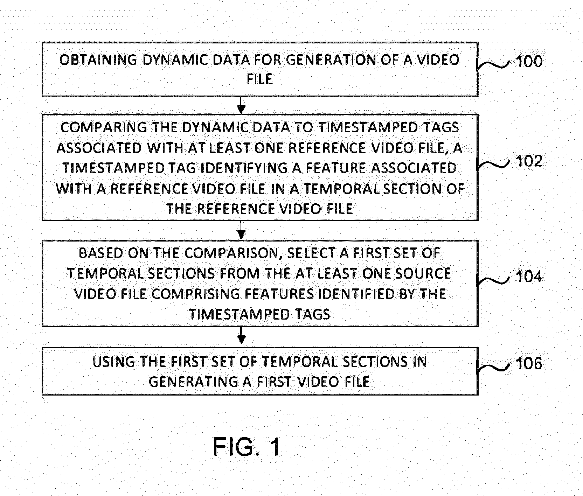

FIG. 1 illustrates a flow chart of a method for generating a video file according to an embodiment.

A desired video file may be generated based on at least one source video file. The at least one source video file may be stored in a local data storage, or alternatively, it may be accessed via a data connection, for example, via the Internet. Each source video file has been associated with at least one timestamped tag. The term "tag" may refer to a piece of information that somehow identifies content or a feature appearing in a source video file. For example, a tag may be "dog", "blue sky", "accelerating car", "rain", "happy people", "green grass" etc. In other words, a tag may represent a characteristic or feature relating to the source video file. The term "timestamped" may identify a subsection of the source video file during which content identified by a tag is prevailing in the source video file. This is exemplified in the following table.

| Tag | Timestamp |
|---|---|
| dog | 0 min 10 s - 0 min 25 s |
| cat | 0 min 20 s - 0 min 40 s |
| sad | 3 min 12 s - 3 min 44 s |
| rain | 3 min 30 s - 3 min 44 s |

As can be seen from the table, more than one tag may prevail at a specific time moment.

At 100 dynamic data for generation of a video file is obtained. The term "dynamic data" may refer to any data than can be obtained from a user and/or is somehow associated with the user. The dynamic data may include, for example, at least one of the following: a keyword input from a user, a length input of the video file from the user, a style input of content in the video file from the user, a mood input of content in the video file from the user, an example video file from the user, user account information, an example image from the user, data from at least one user configured dynamic data application programming interface (API), user website information, and social media account information.

At 102 the dynamic data is compared to timestamped tags associated with at least one source video file. As already discussed above, a timestamped tag identifies a feature associated with a source video file in a temporal section of the source video file. As an example, the user may provide a user input "dog, sky, grass". The user may additionally provide an input for the length of the video file (for example, 60 seconds) to be output and a mood for the video file (for example, "peaceful").

At 104 based on the comparison, a first set of temporal sections is selected from the at least one source video file comprising features identified by the timestamped tags. In an embodiment, a single subsection of a source video file may contain more than one tag. For example, a tag "dog" may be associated with a timestamp "1 min 10 s - 1 min 55 s", a tag "sky" may be associated with a timestamp "1 min 20 s - 1 min 45 s" and a tag "grass" may be associated with a timestamp "1 min 25 s - 1 min 34 s". The end result of the comparison may be that the subsection best matching to all tags is selected from the source video file, i.e. the subsection "1 min 25 s - 1 min 34 s".

At 106 the first set of temporal sections is used in generating a first video file. The selected temporal sections may be selected from a plurality of difference source video files. If the user provided an input for the length of the video file, the total length of the selected temporal sections may be limited to the input length.

The steps illustrated above may be performed, for example, a processor or processors or an apparatus, for example, a computer executing a computer program.

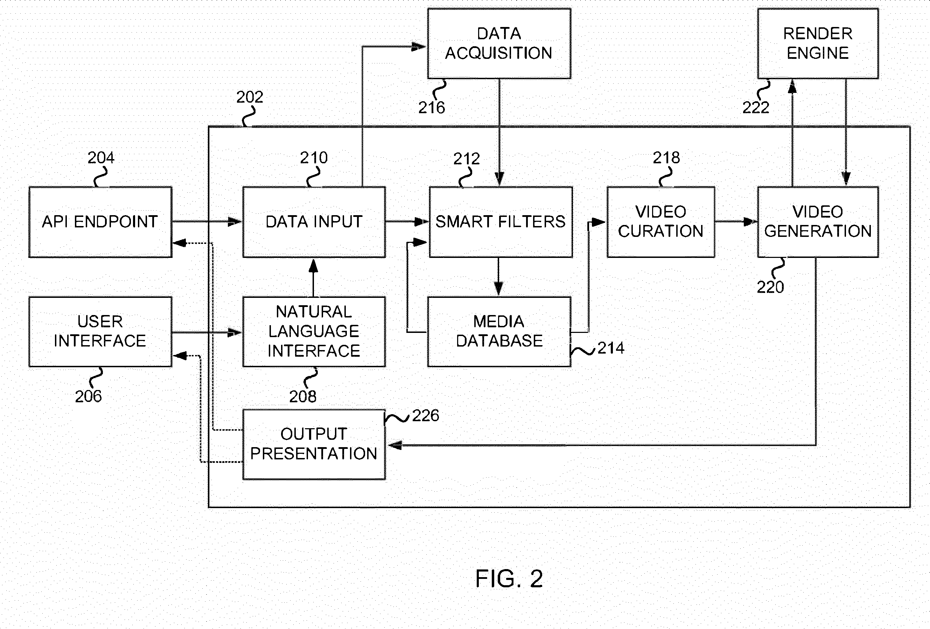

FIG. 2 illustrates a block diagram illustrating operation of a video generator engine 202. The video generator engine 202 may be implemented, for example, as software stored in a memory and executed by at least one processor.

The video generator engine 202 may receive dynamic data from at least one application programming interface (API) endpoint 204 and/or a user interface 206. A data input module 210 may receive the input from the API endpoint 204 and/or from a natural language interface module 208 connected to the user interface 206. The data input module 210 provides the input data to a data acquisition module 216. Data acquisition may refer to user data acquired from the user's inputted data for the creation of videos. This includes but is not limited to crawling user website data such as web domain URL, website CSS styles, colors, fonts, logos, social media information received from the user's social media account login information, social media content, company industry information and uploaded video footage, photos and logo.

A smart filter module 212 may comprise one or more smart filters. The smart filter module 212 may process data and compare the data to a media pool or database 214. The media database 214 may comprise source video files that have been analyzed and associated with timestamped keyword tags. The timestamped keyword tags may be generated by analyzing video footage and images with image recognition and computer vision technology. A database list of keywords and a relative keyword hierarchy may be generated by listing keywords the technology identifies as being visible in the video footage and images. The analyzed video footage and images may be given unique identifiers and the keywords may be linked to the footage by these unique identifiers.

The media database 214 may comprise a relative database that consists of timestamped keyword tags generated from the video footage and images analyzed with an image recognition technology. The timestamped keyword tags may be organized hierarchically to enable broader matches for video composition creation. This enables presenting relevant footage and videos to the user based on larger subject categories. For example, a video of a dog at 00:18 of a stock footage video clip would normally be very hard for the user to find by watching tens of videos labeled with the metadata tag "dog". The timestamp tag technology can incorporate only the relevant part of the video footage with the dog present in the video in the final video composition.

The user may additionally provide input via the user interface 206 to choose mood, length and style of the video file he wants to create. The mood setting may affect, for example, to the style and tempo of music chosen for the video file to be generated, an animation style of text and complexity used to animate text titles within the video file, and the frequency of video edit cuts from one video clip (i.e. a temporal section of a source video file) to another.

A video curation module 218 selects video, photo and music library content retrieved from the media database 214 based on data acquisition 216 module, a natural language interface module 208 and a user interface module 206. By reading information from the modules 212, 216, 208 and 206, the video curation 218 module creates a formula of the video edit that best fits the user's inputted commands and needs.

The video generator engine 202 then compiles a video file by using a render engine 222 based on video footage that matches the dynamic data. The video generation engine 202 may automatically generate multiple video file versions based on the dynamic data. As an example, the user may have provided the keywords "travel", "summer" and "city". The video generation engine 202 may additionally use, for example, user login information indicating that the user is based in the United States and a CSS color palette from a website corresponding to the user's company email address as dynamic data. In other embodiments, the video generator engine 202 may generate multiple different video files. The generated video file(s) may be displayed for the user via the user interface 206.

In some embodiments, the video generator engine 202 may be configured to match video edit points of the video file with the musical beats of an audio file. When the video generator engine 202 compiles a video composition on an edit timeline, it may match video edit points with the music beats to create a rhythmic feel to the video. For example, if the user provided an input "calm" as the mood of the video file to be generated, the video generator engine 202 will choose a music from a media library that meets this predetermined prerequisite. The video generator engine 202 will then edit the video file to change from one video clip to the next on musical beats. As another example, if the user chose "energetic" as a mood for the video file, video edit intervals will be shorter. The music beat recognition may be based on analyzing audio information from digital music files in a multiband equalizer manner. The audio files may be analyzed for beats on the bass, mid and high frequencies. Unique edit maps may then be generated from the multiband information from the music tracks. Although it may be discussed here that the video generator engine 202 may obtain and analyze an audio file, in other embodiments the audio analysis may be performed elsewhere and the video generator engine 202 may then use the generated edit maps when compiling the video file.

In some embodiments, the video generator engine 202 may be configured to receive a selection of a sub-section of the generated video file and generate at least one additional video file based on the selected sub-section. The user may also choose a video clip on the editing timeline that he prefers and would like to add more. When the user chooses to seed a video clip, the video generator engine 202 compares the video clip's database unique identifier to the corresponding tags related to the video clip's image recognition data. For example, if the video has a dog on a green lawn present in the footage the system will seed more footage of dogs on a green background. In an embodiment, the user may also broaden the seed match to incorporate domestic animals in general. The video generator engine 202 will then seed more video content to be inserted on the video timeline with other domestic animals such as cats.

In some embodiments, the video generator engine 202 may create multiple versions of a video file for different channels and video formats automatically. When the user creates a video file, the video generator engine 202 may treats the first version as a master composition. The video generator engine 202 may incorporate image recognition to create content aware versions of the original video file. This enables creating multiple versions of the video in multiple image ratios to be used, for example, in multiple presentation formats. The multiple versions may include, for example, at least one of a 16:9 ratio video, a 1:1 ratio video and a portrait 9:16 version of the video. Utilizing image recognition technology the image compositions may be resized automatically with all the relevant foreground image elements within the cropped image area. For example, all images containing foreground human faces may be moved to fit within the video frame to accommodate them being fully visible on the screen.

In practice, the video generator engine 202 may be implemented as a network-based solution that can be accessed by the user, for example, by using a web browser via the Internet.

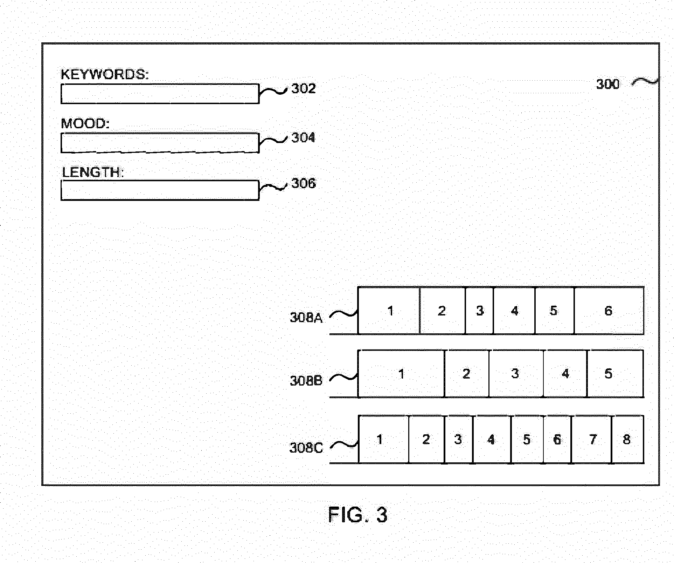

FIG. 3 illustrates an example view 300 presented to a user for generating a video file according to an embodiment. The view 300 may be provided to the user, for example, as a web page with a web browser. It is evident that the view 300 is a simplified view and views presented to the user may comprise additional and/alternative elements.

The user may give input via one or more input fields 302, 304, 308. The user may specify, for example, one or more keywords via the input field 302, a mood for the video file via the input field 304 and a length for the video file via the input field 306. As has been discussed earlier, instead or additionally, various data may be used as an input for the generation of the video file.

In response to the provided input, one or more video files 308A, 308B, 308C are generated and they are indicated or presented for the user via the web page. In this example, three different video files are provided. The first video file 308A includes six different video clips that have been compiled to a single video file. The second video file 308B includes five different video clips that have been compiled to a single video file. The third video file 308c includes eight different video clips that have been compiled to a single video file. The user may be given a possibility to download each video. In another embodiment, the web page may enable to watch the videos in a small preview window.

In an embodiment, a timeline may be provided for each of the video files 308A, 308B, 308C. In an embodiment, the user may be able to selects a sub-section of the generated video file 308A, 308B, 308C from the timeline. The sub-section may cover a whole video clip of or a part of a specific video clips or clips. Based on the selection, one or more additional video file may be generated.

The view 300 provided to the user may be generated by a system or a server accessible via a data communication network, for example, the Internet.

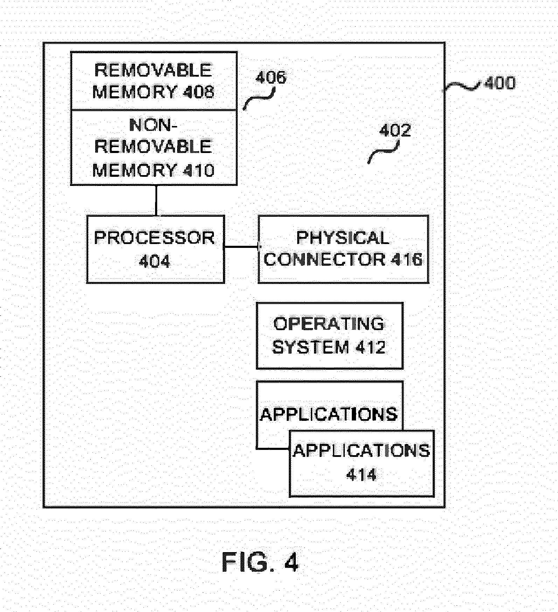

FIG. 4 illustrates a system diagram depicting an exemplary system 400 including a variety of optional hardware and software components, shown generally at 402. Any components 402 in the system 400 can communicate with any other component, although not all connections are shown, for ease of illustration. The system 400 can be any of a variety of computing devices (for example, a computer, a cloud-based server, a network server etc.) and can allow two-way communications with one or more communications networks, such as the Internet.

The illustrated system 400 can include one or more controllers or processors 404 (e.g., signal processor, microprocessor, ASIC, or other control and processing logic circuitry) for performing such tasks as signal coding, data processing, input/output processing, power control, and/or other functions. An operating system 412 can control the allocation and usage of the components 402 and support for one or more application programs 414. The application programs can include common computing applications (e.g., server software), or any other computing application.

The illustrated system 400 can include a memory 406. The memory 406 can include non-removable memory 410 and/or removable memory 408. The non-removable memory 410 can include RAM, ROM, flash memory, a hard disk, or other well-known memory storage technologies. The removable memory 408 can include flash memory or other well-known memory storage technologies. The memory 406 can be used for storing data and/or code for running the operating system 412 and the applications 414. Example data can include web pages, text, images, sound files, video data, or other data sets to be sent to and/or received from one or more network servers or other devices via one or more wired or wireless networks. The memory 406 may also be used to store a relative database that consists of timestamped keyword tags generated from various video footage and images analyzed with an image recognition technology.

The system 400 can further include at least one physical connector 416, which can be a USB port, IEEE 1494 (FireWire) port, and/or RS-242 port etc.

The illustrated components 402 are not required or all-inclusive, as any components can be deleted and other components can be added.

The system 400 may be configured to implement the various features, examples and embodiments illustrated in FIGS. 1-2 partially or completely. The functionality described herein can be performed, at least in part, by one or more computer program product components such as software components. According to an example, the processor 404 may be configured by the program code which when executed performs the examples and embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

Further, one or more of the disclosed elements or components 402 of the system 400 may constitute means for obtaining dynamic data for generation of a video file; means for comparing the dynamic data to timestamped tags associated with at least one source video file, a timestamped tag identifying a feature associated with a source video file in a temporal section of the source video file; means for based on the comparison, selecting a first set of temporal sections from the at least one source video file comprising features identified by the timestamped tags; and means for using the first set of temporal sections in generating a first video file.

One or more of the aspects, embodiments and examples illustrated above may enable an easy and intuitive solution for generating a video file or video files. There is no need for a user to perform video editing manually. The illustrated solution may also enable a quick generation of video files. Further, as tags associated with at least one source video file are timestamped, various sections of the at least one source video file matching with obtained dynamic data can be identified quickly and efficiently.

Those skilled in the art should understand that each step or operation, or any combinations of the steps or operation mentioned above, can be implemented by various means, such as hardware, firmware, and/or software. As an example, one or more of the steps or operation described above can be embodied by computer or processor executable instructions, data structures, program modules, and other suitable data representations. Furthermore, the computer executable instructions which embody the steps or operation described above can be stored on a corresponding data carrier and executed by at least one processor like the processor included in the system. This data carrier can be implemented as any computer-readable storage medium configured to be readable by said at least one processor to execute the computer executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the exemplary embodiments of the present invention are disclosed herein, it should be noted that any various changes and modifications could be made in the embodiments of the present invention, without departing from the scope of legal protection which is defined by the appended claims. In the appended claims, the mention of elements in a singular form does not exclude the presence of the plurality of such elements, if not explicitly stated otherwise. 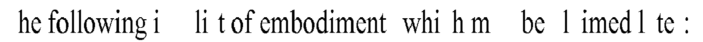
1. A system for generating a video file, the system comprising:
   at least one processing unit;
   at least one memory connected to the at least one processing unit;
   wherein the at least one memory stores program instructions that, when executed by the at least one processing unit, cause the system to:
      obtain dynamic data for generation of a video file;
      compare the dynamic data to timestamped tags associated with at least one source video file, a timestamped tag identifying a feature associated with a source video file in a temporal section of the source video file;
      based on the comparison, select a first set of temporal sections from the at least one source video file comprising features identified by the timestamped tags; and
      use the first set of temporal sections in generating a first video file.
2. The system of embodiment 1, wherein the at least one memory stores program instructions that, when executed by the at least one processing unit, cause the system to:
   based on the comparison, select a second set of temporal sections from the at least one source video file comprising features identified by the timestamped tags, the first set of temporal sections differing from the second set of temporal sections; and
   use the second set of temporal sections in generating a second video file.
3. The system of embodiment 1, wherein the dynamic data comprises at least one of the following:
   a keyword input from a user;
   a length input of the video file from the user;
   a style input of content in the video file from the user;
   a mood input of content in the video file from the user;
   an example video file from the user;
   user account information;
   an example image from the user;
      data from at least one user configured dynamic data application programming interface (API)
      user website information; and
      social media account information.
4. The system of embodiment 1, wherein the at least one memory stores program instructions that, when executed by the at least one processing unit, cause the system to:
   analyze the example video file from the user to determine at least one desired feature; and
   compare the at least one desired feature to the timestamped tags associated with at least one source video file.
5. The system of embodiment 1, wherein the at least one memory stores program instructions that, when executed by the at least one processing unit, cause the system to:
   receive a selection of a sub-section of the generated video file; and
   generate at least one additional video file based on the selected sub-section.
6. The system of embodiment 1, wherein the at least one memory stores program instructions that, when executed by the at least one processing unit, cause the system to:
   compare the dynamic data to timestamped tags associated with at least one source video file and to tags associated with at least one image file;
   based on the comparison, select the first set of temporal sections from the at least one source video file comprising features identified by the timestamped tags and at least one image file; and
   use the first set of temporal sections and the at least one image file in generating the first video file.
7. The system of embodiment 1, wherein the at least one memory stores program instructions that, when executed by the at least one processing unit, cause the system to:
   match video edit points of the video file with music beat of an audio file.
8. A method for generating a video file, the method comprising:
   obtaining dynamic data for generation of a video file;
   comparing the dynamic data to timestamped tags associated with at least one source video file, a timestamped tag identifying a feature associated with a source video file in a temporal section of the source video file;
   based on the comparison, selecting a first set of temporal sections from the at least one source video file comprising features identified by the timestamped tags; and
   using the first set of temporal sections in generating a first video file.
9. The method of embodiment 8, further comprising:
   based on the comparison, selecting a second set of temporal sections from the at least one source video file comprising features identified by the timestamped tags, the first set of temporal sections differing from the second set of temporal sections; and
   using the second set of temporal sections in generating a second video file.
10. The method of embodiment 8, wherein the dynamic data comprises at least one of the following:
   a keyword input from a user;
   a length input of the video file from the user;
   a style input of content in the video file from the user;
   a mood input of content in the video file from the user;
   an example video file from the user;
   user account information;
   an example image from the user;
   data from at least one user configured dynamic data application programming interface (API);
   user website information; and
   social media account information.
11. The method of embodiment 10, further comprising:
   analyzing the example video file from the user to determine at least one desired feature; and
   comparing the at least one desired feature to the timestamped tags associated with at least one source video file.
   The method of embodiment 8, further comprising:
   receiving a selection of a sub-section of the generated video file; and
   generating at least one additional video file based on the selected sub-section.
   The method of embodiment 8, further comprising:
   matching video edit points of the video file with music beat of an audio file.
   The method of embodiment 8, further comprising:
   comparing the dynamic data to timestamped tags associated with at least one source video file and to tags associated with at least one image file;
   based on the comparison, selecting the first set of temporal sections from the at least one source video file comprising features identified by the timestamped tags and at least one image file; and
   using the first set of temporal sections and the at least one image file in generating the first video file.
15. A computer program comprising program code which, when executed by at least one processor, performs the method of embodiment 8.
16. A computer-readable medium comprising a computer program comprising program code which, when executed by at least one processor, performs the method of embodiment 8.

## Claims

1. A system for generating a video file, the system comprising:
at least one processing unit;
at least one memory connected to the at least one processing unit;
wherein the at least one memory stores program instructions that, when executed by the at least one processing unit, cause the system to:
obtain dynamic data for generation of a video file;
compare the dynamic data to timestamped tags associated with at least one source video file, a timestamped tag identifying a feature associated with a source video file in a temporal section of the source video file;
based on the comparison, select a first set of temporal sections from the at least one source video file comprising features identified by the timestamped tags; and
use the first set of temporal sections in generating a first video file.

2. The system of claim 1, wherein the at least one memory stores program instructions that, when executed by the at least one processing unit, cause the system to:
based on the comparison, select a second set of temporal sections from the at least one source video file comprising features identified by the timestamped tags, the first set of temporal sections differing from the second set of temporal sections; and
use the second set of temporal sections in generating a second video file.

3. The system of claim 1 or 2, wherein the dynamic data comprises at least one of the following:
a keyword input from a user;
a length input of the video file from the user;
a style input of content in the video file from the user; a mood input of content in the video file from the user; an example video file from the user;
user account information;
an example image from the user;
data from at least one user configured dynamic data application programming interface;
user website information; and
social media account information.

4. The system of any preceding claim, wherein the at least one memory stores program instructions that, when executed by the at least one processing unit, cause the system to:
analyze the example video file from the user to determine at least one desired feature; and
compare the at least one desired feature to the timestamped tags associated with at least one source video file.

5. The system of any preceding claim, wherein the at least one memory stores program instructions that, when executed by the at least one processing unit, cause the system to:
receive a selection of a sub-section of the generated video file; and generate at least one additional video file based on the selected sub-section.

6. The system of any preceding claim, wherein the at least one memory stores program instructions that, when executed by the at least one processing unit, cause the system to:
compare the dynamic data to timestamped tags associated with at least one source video file and to tags associated with at least one image file;
based on the comparison, select the first set of temporal sections from the at least one source video file comprising features identified by the timestamped tags and at least one image file; and
use the first set of temporal sections and the at least one image file in generating the first video file.

7. The system of any preceding claim, wherein the at least one memory stores program instructions that, when executed by the at least one processing unit, cause the system to:
match video edit points of the video file with music beat of an audio file.

8. A method for generating a video file, the method comprising:
obtaining dynamic data for generation of a video file;
comparing the dynamic data to timestamped tags associated with at least one source video file, a timestamped tag identifying a feature associated with a source video file in a temporal section of the source video file;
based on the comparison, selecting a first set of temporal sections from the at least one source video file comprising features identified by the timestamped tags; and
using the first set of temporal sections in generating a first video file.

9. The method of claim 8, further comprising:
based on the comparison, selecting a second set of temporal sections from the at least one source video file comprising features identified by the timestamped tags, the first set of temporal sections differing from the second set of temporal sections; and
using the second set of temporal sections in generating a second video file.

10. The method of claim 8 or 9, wherein the dynamic data comprises at least one of the following:
a keyword input from a user;
a length input of the video file from the user;
a style input of content in the video file from the user; a mood input of content in the video file from the user; an example video file from the user;
user account information;
an example image from the user;
data from at least one user configured dynamic data application programming interface (API);
user website information; and social media account information.

11. The method of claim 10, further comprising:
analyzing the example video file from the user to determine at least one desired feature; and
comparing the at least one desired feature to the timestamped tags associated with at least one source video file.

12. The method of any one of claims 8 to 11, further comprising:
a) receiving a selection of a sub-section of the generated video file; and generating at least one additional video file based on the selected sub-section;
and/or
b) matching video edit points of the video file with music beat of an audio file.

13. The method of any one of claims 8 to 12, further comprising:
comparing the dynamic data to timestamped tags associated with at least one source video file and to tags associated with at least one image file;
based on the comparison, selecting the first set of temporal sections from the at least one source video file comprising features identified by the timestamped tags and at least one image file; and
using the first set of temporal sections and the at least one image file in generating the first video file.

14. A computer program comprising program code which, when executed by at least one processor, performs the method of any one of claims 8 to 13.

15. A computer-readable medium comprising a computer program comprising program code which, when executed by at least one processor, performs the method of any one of claims 8 to 13.
